# EUROPEAN PATENT APPLICATION

(11) **EP 1 385 006 A2**
(43) Date of publication of application: **28.01.2004**
(21) Application number: 03077284.2
(22) Date of filing: 17.07.2003
(51) Int. Cl.: G01N 35/00, B01L 3/00, B01J 19/00

(54) **System and cartridge for processing a biological sample**

(30) Priority: 24.07.2002 US 398091 P
(71) Applicant: F. HOFFMANN-LA ROCHE AG, 4070 Basel (CH); Roche Diagnostics GmbH, 68305 Mannheim (DE); Combimatrix Corporation, Mukilteo, WA 98275 (US)
(72) Inventor: Prokop, Sara Akiko, Lynnwood, WA 98037 (US); Slota, Michael William, Kirkland, WA 98034 (US); Händler, Erich, 68623 Lampertheim (DE); Degenhardt, Volker, 64625 Bensheim (DE)
(74) Representative: Ventocilla, Abraham

(57) **Abstract**

There is disclosed a sample processing system for processing a sample contained in a liquid. Specifically, there is disclosed a sample processing system comprising a pipettor (11), and a cartridge (12). The cartridge (12) comprises a chamber (13) which has an inlet (14) and an outlet (15). The chamber contains a microarray device (16) having an active surface (17). The active surface (17) is accessible to liquid contained in the chamber (13). The cartridge (12) further comprises an optical interface (18) that provides optical access to the active surface of the microarray device, an inlet port and an outlet port. The inlet port is so configured and dimensioned that it forms an air-tight connection with a pipette tip when the pipette tip is inserted into the inlet port.

## Description

The present invention relates to a system for processing a biological sample contained in a liquid. The invention further relates to a cartridge holder of a microarray device useful for processing a biological sample contained in a liquid. More specifically, the invention relates to a cartridge holder of a microarray device designed for an automatic pippetting system for automatically dispensing liquids to communicate with the microarray device.

Within the context of the instant invention is a chip or microarray-shaped carrier is a substrate, in particular a glass or silicon chip diced from a wafer and printed as a semiconductor device. The chip or microarray device can be of any shape when cut out of a wafer, but such devices are best packed onto a wafer format in a square or rectangular shape. A printed wafer generally has a thickness of about 0.7 to about 1.0 millimeter. The microarray semiconductor device has a printed face or "active surface." When synthesized with oligomers or organic molecules, it is a microarray device having a plurality of sites at known locations having known oligomers (such as polypeptides, oligonucleotides or other polymeric organic molecules) accessible for assay or evaluation on the active surface of the microarray device. Generally, microarrays having DNA or oligonucleotides as the oligomers on the active surface. The oligonucleotides or single-stranded DNA fragments serve as probes for binding to or hybridizing to test sample nucleic acid molecules at regions of relative complementary sequences. Biological polymers that are part of the active surface of the microarray include, for example, proteins, nucleic acids, sugars (polysaccharides) and copolymers of proteins nucleic acids and sugars.

The present invention provides a cassette device for holding a microarray device having a plurality of biological polymers thereon its active surface and allowing for automatic filling and draining of liquids necessary to apply sample and process sample on the microarray device active surface. Such an inventive device is called a cassette or an analytical cartridge.

Microarray devices in general and microarrays containing oligonucleotides as the biological polymer in particular contained in such cassettes have a wide range of research, diagnostic and analytical applications. Microarray devices measure binding of sample nucleic acids to the biological polymers synthesized or located on the active surface or within a matrix on the active surface of the microarray device. The process by which sample nucleic acid binds to the capture probes or nucleic acids bound to known locations on the active surface of the microarray device is known ad hybridization. The hybridization binding reaction between two single strands of nucleic acids forms a region of double-stranded nucleic acid under certain experimental conditions. The locations at which hybridization occurs are detected with appropriate detection systems, such as by labeling the targets with a detectable marker moiety such as a fluorescent dye, radioactive isotope, enzyme, or other marker.

Various techniques have been used to make microarray devices. Such techniques for synthesizing DNA content on microarray devices include in situ synthesis technologies, such as photolithography -based synthesis, ink jet printing, and electrochemical synthesis. In addition, depositing fully-formed polymeric DNA content onto known locations on a microarray device include ink jet printing, computer-aided spotting and electric field localization of negatively-charged polynucleotides. The density of known locations or different polynucleotides on a single microarray device is a function of the technique used to fabricate the microarray device. However, all of the techniques in the art, such as various forms of spotting, photolithography and electrochemical can produce densities of greater than 10,000 sites or known locations per cm² of microarray surface area.

The microarray device is exposed to sample nucleic acid material to be tested such that the active surface of the microarray is exposed to sample and solutions designed to promote hybridization of nucleic acid under predetermined stringency conditions. Some microarray devices are spotted or printed onto a glass microscope slide and this slide is dipped into the appropriate solutions at the appropriate temperatures for appropriate periods of time. While this process is relatively simple, it is labor-intensive and requires an operator to be present for 6-10 steps over a 16-24 hour period of time. That is often difficult for laboratory researches who do not frequently remain at laboratories for an entire 24 hour day at a time. Therefore, there is a need in the art to better automate the process of processing samples on a microarray device so that it will not be a labor-intensive and allow for larger numbers of samples to be run with greater labor efficiency in a research laboratory environment

Various flow cell chambers and devices have a liquid sample supplied to the process chamber of the cartridge via a valve block. The valve block is connected by a conduit to an inlet port of the cartridge. This prior art arrangement has two serious drawbacks. On the one hand air bubbles in the valve block and/or the connecting conduit get into the process chamber, prevent that the entire active surface of the chip is accessible to the liquid sample to be examined, and prevent thereby obtaining reliable test results. Another flow cell device used for microarrays from Affymetrix does not even have a valve block but, instead, tries to have an air bubble enter the chamber to assist in mixing the liquid contents of the chamber. However, either the use of one and the same valve block over longer periods of time, connection of the same valve block to different process chambers or the lack of a valve block altogether, raises the problem of cross-contamination by carry-over of the liquid samples to be tested. Additions problems encountered include clogging of the valves that can arise due to high salt concentration of liquids being processed is a further drawback that negatively affects the reliability of the operation of the analysis system. Moreover when several cartridges are processed in parallel, a plurality of conduits and a complex and therefore expensive valve block is required in order to supply the liquid samples to be tested to the cartridges. Therefore, the present invention was made to improve the inlet assemblies of cartridges in general and microarray cartridges in particular to overcome the foregoing problems.

A main aim of the invention is therefore to provide a sample processing system and a cartridge that makes possible to avoid at least one of the above-mentioned drawbacks, and preferably all of it.

According to a first aspect of the invention this aim is achieved with a sample processing system for processing a sample contained in a liquid, said sample processing system comprising:
a) a pipettor having a pipette tip for dispensing liquids, and
b) a cartridge comprising:
   (b.1) a chamber which has an inlet and an outlet, said chamber containing a microarray having an active surface which carries an array of different oligomers at known locations, said active surface being accessible to liquid contained in the chamber,
   (b.2) a first optical interface which provides optical access to said active surface of said microarray device, and
   (b.3) an inlet port and an outlet port, said inlet port being so configured and dimensioned that it forms an air-tight connection with the pipette tip when said pipette tip is inserted into said inlet port.

According to a second aspect of the invention the above-mentioned aim is achieved with a cartridge for processing a sample contained in a liquid, said cartridge comprising:
(a) a flow-cell having a chamber which has an inlet and an outlet, said flow-cell containing a microarray device having an active surface, said active surface being accessible to liquid contained in that chamber, and
(b) a housing containing said flow-cell, said housing comprising:
   (b.1) a optical interface which provides optical access to said active surface of said microarray device,
   (b.2) an inlet port and an outlet port,
   (b.3) a first conduit connecting said inlet port of said housing with said inlet of the flow-cell, and
   (b.4) a second conduit connecting said outlet of said flow cell with said outlet port of said housing.

According to a third aspect of the invention the above-mentioned aim is achieved with a sample processing system for processing a sample contained in a liquid, said sample processing system comprising:
(a) a cartridge having
   (a.1) a chamber which has an inlet and an outlet, said chamber containing a microarray having an active surface which carries an array of different oligomers at known locations, said active surface being accessible to liquid contained in the chamber,
   (a.2) a first optical interface which provides optical access to said active surface of said microarray device, and
   (a.3) an inlet port and an outlet port, said inlet port being so configured and dimensioned that it forms an air-tight connection with a pipette tip when said pipette tip is inserted into said inlet port; and
(b) an optical system for imaging and measuring a fluorescence or chemiluminescence generated on said active surface of said microarray device.

According to a fourth aspect of the invention the above-mentioned aim is achieved with a sample processing system for processing a sample contained in a liquid, said sample processing system comprising:
(a) a cartridge having:
   (a.1) a chamber which has an inlet and an outlet, said chamber containing a microarray having an active surface which carries an array of different oligomers at known locations, said active surface being accessible to liquid contained in the chamber,
   (a.2) a first optical interface which provides optical access to said active surface of said microarray device, and
   (a.3) an inlet port and an outlet port, said inlet port being so configured and dimensioned that it forms an air-tight connection with a pipette tip when said pipette tip is inserted into said inlet port:
(b) a cartridge holder adapted for holding said cartridge in such a position that the flow-cell inlet lies at a lower height than the flow-cell outlet, so that liquid supplied to the flow-cell chamber through said inlet displaces air contained in said chamber and enables filling of said chamber with liquid and without bubbles, whereby any excess of liquid leaving said chamber through said flow-cell outlet, and
(c) a waste container for receiving excess liquid flowing out of the flow-cell outlet.

According to a fifth aspect of the invention the above-mentioned aim is achieved with a sample processing system for processing a sample contained in a liquid, said sample processing system comprising:
(a) a plurality of cartridges, wherein each cartridge comprises:
   (a.1) a chamber which has an inlet and an outlet, said chamber containing a microarray having an active surface which carries an array of different oligomers at known locations, said active surface being accessible to liquid contained in the chamber,
   (a.2) a first optical interface which provides optical access to said active surface of said microarray device, and
   (a.3) an inlet port and an outlet port, said inlet port being so configured and dimensioned that it forms an air-tight connection with a pipette tip when said pipette tip is inserted into said inlet port:
(b) a cartridge holder for holding said plurality of cartridges,
(c) a waste container for receiving excess liquid flowing out from any and all of the outlet ports of said plurality of cartridges.

The main advantage of the inventive sample processing system and the inventive cartridge is that they make possible to achieve a bubble-free filling of the process chamber with the liquid sample to be examined, thereby ensuring that the entire active surface of the microarray device is contacted by said liquid. Moreover the possibility of contamination of the liquid sample to be examined by carry over is eliminated, because the cartridge which receives the liquid sample to be examined is only connected to the end part of a pipettor only during the short time intervals wherein the liquid sample is introduced into the cartridge respectively the process chamber in the cartridge. The risk of contamination by carry-over is eliminated in particular by using disposable pipetting tips for effecting the pipetting operations. Also the other above mentioned drawbacks of the above-mentioned prior art apparatuses, such as clogging of valves or conduits and use of expensive valve blocks, is eliminated by the sample processing system and cartridge according to the invention. Therefore, the present invention provides a sample processing system and cartridge that makes possible to obtain reliable test results and to achieve a substantially reliability of operation.

Preferred exemplary embodiments of the invention are described hereinafter more in detail with reference to the accompanying drawings, wherein
Fig. 1 shows a schematic cross-sectional view of essential components of a system according to the invention.
Fig. 2 shows a schematic cross-sectional view of a system according to Fig. 1 and shows additional components of that system.
Fig. 3 shows a perspective exploded view of the components of a cartridge according to the invention.
Fig. 4 shows another perspective exploded view of the components of the cartridge shown by Fig.3.
Fig. 5 shows a top view of intermediate member 34 shown in Figures 3 and 4.
Fig. 6 shows a front view of an assembled cartridge having the components shown in Figures 3 and 4.
Fig. 7 shows a top view of an assembled cartridge having the components shown in Figures 3 and 4.
Fig. 8 shows a side view of an assembled cartridge having the components shown in Figures 3 and 4.
Fig. 9 shows a perspective exploded view of the components of a flow-cell 31 of the cartridge shown in Figures 3 and 4.
Fig. 10 shows electro-optical means optically coupled to the optical interface 35 of cartridge 12 having the structure described hereinafter with reference to Figures 3 to 9.

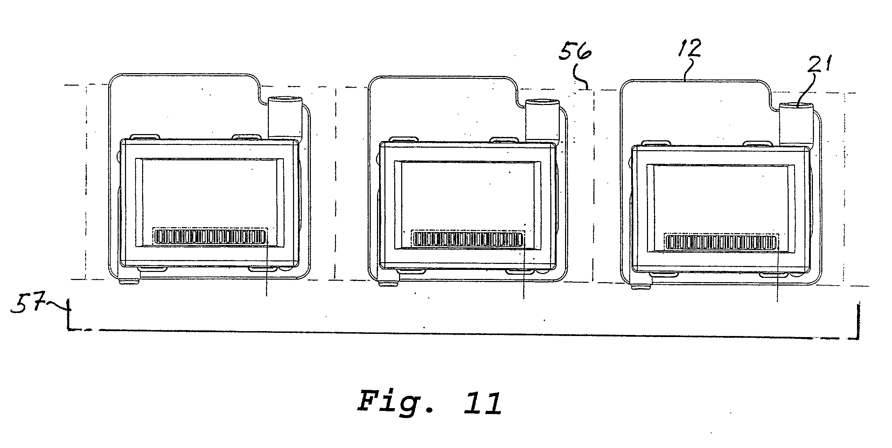

Fig. 11 shows a partial view of a system according to the invention comprising a cartridge holder 56 holding a plurality of cartridges 12 and a waste container 57.
Fig. 12 schematically shows a top view of a system according to the invention.

| **List of reference numbers** | |
|---|---|
| 11 | pipettor |
| 12 | cartridge |
| 13 | chamber |
| 14 | inlet |
| 15 | outlet |
| 16 | microarray device |
| 17 | active surface |
| 18 | glass plate / optical interface |
| 19 | |
| 20 | |
| 21 | inlet port |
| 22 | outlet port |
| 23 | pipettor end part / pipetting tip |
| 24 | first channel / first conduit |
| 25 | second channel / second conduit |
| 26 | inner surface |
| 27 | closure |
| 28 | thermal interface |
| 29 | |
| 30 | |
| 31 | flow-cell |
| 32 | housing basis plate |
| 33 | housing cover plate |
| 34 | housing intermediate member |
| 35 | optical interface |
| 36 | thermal interface |
| 37 | outer surface of flow-cell |
| 38 | heat transfer element |
| 39 | |
| 40 | |
| 41 | first surface of microarray device |
| 42 | second surface of microarray device |
| 43 | edge |
| 44 | base plate |
| 45 | depression |
| 46 | bottom surface |
| 47 | cover plate |
| 48 | frame plate |
| 49 | opening |
| 50 | |
| 51 | optical imaging means |
| 52 | light source |
| 53 | light filter |
| 54 | light receiving element |
| 55 | light filter |
| 56 | cartridge holder |
| 57 | waste container |
| 58 | |
| 59 | |
| 60 | |
| 61 | automatic pipetting system |
| 62 | set of pipetting tips |
| 63 | set of pipetting tips |
| 64 | control system |
| 65 | waste container for pipetting tips |
| 66 | sample tube |
| 67 | reagent container |
| 68 | first module |
| 69 | second module |

### Example 1 Of A System According To The Invention

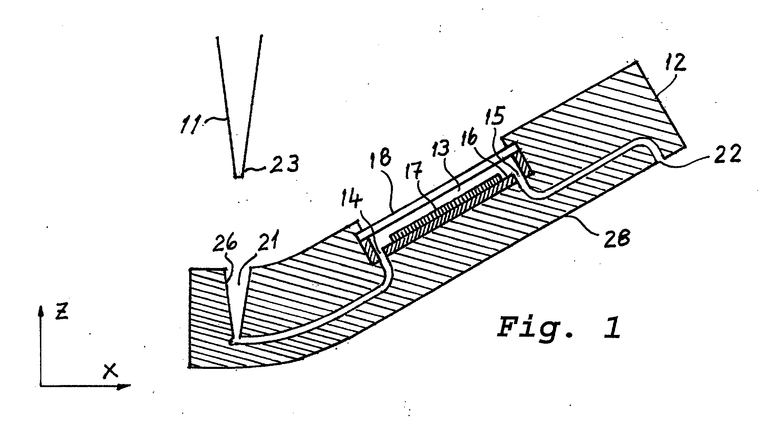

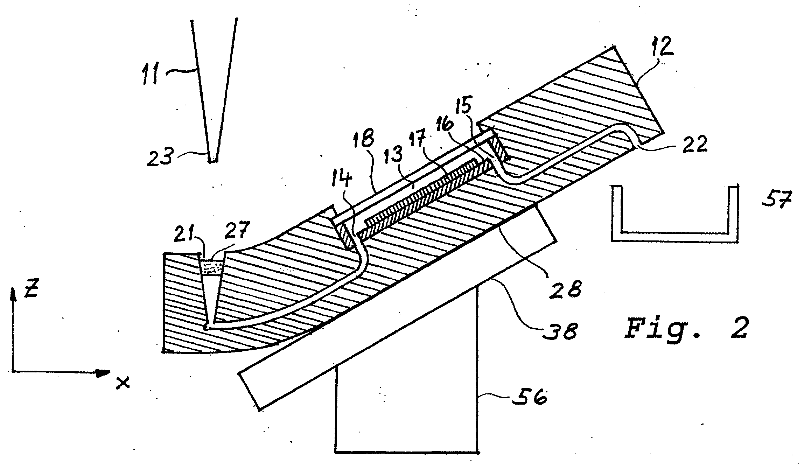

As schematically shown by Fig. 1 a sample processing system according to the invention for processing a sample, such as a genetic analysis of nucleic acids, contained in a liquid comprises a pipettor 11 and a cartridge 12. Cartridge 12 comprises a chamber 13 that has an inlet 14 and an outlet 15. Chamber 13 contains a glass or silicon microarray device 16 having an active surface 17 of the above-mentioned kind that carries an array of biological polymers. Active surface 17 is accessible to liquid contained in chamber 13. Cartridge 12 further comprises an inlet port 21 and an outlet port 22. Inlet port 21 is so configured and dimensioned that it forms an air-tight connection with an end part 23 of pipettor 11 when pipette tip 23 is inserted into inlet port 21.

The pipettor is preferably an automatic pipettor which automatically picks up a pipetting tip of a set of disposable pipetting tips, performs the required pipetting operations with the pipetting tip, e.g. for supplying samples and/or reagents to the chamber 13, ejects the pipetting tip after a pipetting operation and picks up a new pipetting tip for performing a new pipetting operation.

As shown by Fig. 1, chamber 13 is closed by a glass plate 18 that is an optical interface 16 which provides optical access to active surface 17 of chip shaped carrier 16.

In a preferred embodiment, a first channel 24 connects inlet port 21 with chamber inlet 14, a second channel 25 connects chamber outlet 15 with outlet port 22, and chamber inlet 14 lies at a lower height than chamber outlet 15, so that liquid supplied to the chamber 13 through chamber inlet 14 displaces air contained in chamber 13 and enables a complete and bubble free filling of this chamber with liquid. Any excess of liquid flows out of chamber 13 through the outlet 15.

In a preferred embodiment, inlet port 21 is an inlet channel having an inner surface 26 which snuggly fits the outer surface of pipettor end part 23, and inlet 21 port and pipettor end part 23 are thereby adapted to form an air-tight connection.

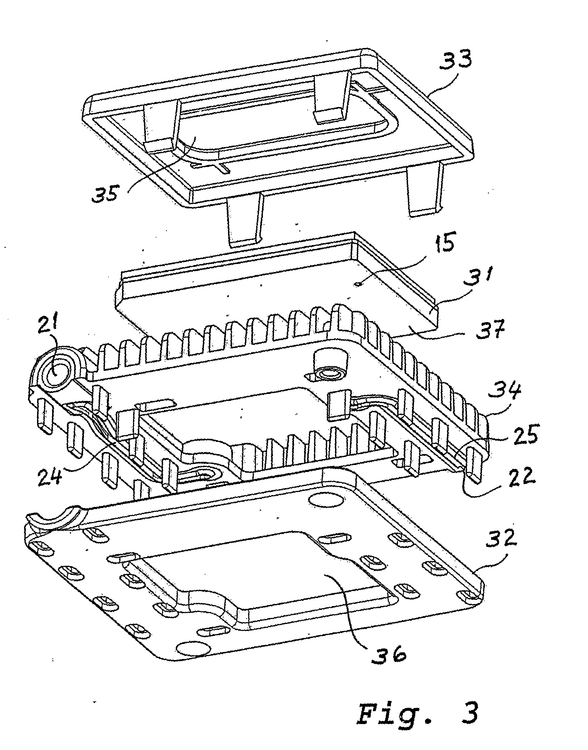

In another preferred embodiment shown by Fig. 2, inlet port 21 is closed by a closure 27 adapted to be pierced by pipette tip 23. In this embodiment inlet port 21 and pipettor end part 23 are so configured and dimensioned that they form an air-tight connection when closure 27 is pierced by pipettor end part 23.

Each of the embodiments of cartridge 12 shown by Figures 1 and 2 comprises a thermal interface 28 that allows to heat or to cool chip shaped carrier 16 by heat exchange with heat transfer means 38 schematically represented in Fig. 2.

A common feature of the embodiments of cartridge 12 shown by Figures 1 and 2 is that inlet port 21 is adapted for receiving pipettor end part 23 inserted in that inlet port 21 coming from a position located above inlet port 21.

Cartridge 12 is made preferably of a plastic material or materials that are suitable for manufacture by injection molding and also for carrying out the envisaged process steps for processing a sample containing liquid of the above mentioned kind. In embodiments where there is contact between liquid sample to be tested and the cartridge material, cartridge 12 is made of a plastic material that is chemically inert so that it cannot interfere with the processing of the biological samples contained in the liquids to be tested. Moreover the material chosen for the manufacture of components of cartridge 12 should not be fluorescent, so that they cannot interfere with fluorescence measurements usually performed after processing e.g. a nucleic acid sample contained in a liquid.

### Example Of A Cartridge According To The Invention

A preferred embodiment of a cartridge 12 according to the invention and suitable for use in a system described above with reference to Figures 1 and 2 is described hereinafter in particular with reference to Figures 3 to 9.

Cartridge 12 is a cartridge for processing a biological sample, e.g. nucleic acid or other biological sample contained in a liquid.

Cartridge 12 comprises a flow-cell 31 arranged within a housing composed e.g. of a basis plate 32, an intermediate member 34 and a cover plate 33. In a preferred embodiment these housing parts are made of a plastic material, e.g. a polypropylene. One of the advantages of this two-part structure of cartridge 12, a flow-cell and a housing is advantageous, because it makes possible to improve the quality of the flow-cell which contains the microarray device 16 with the active surface 17, while still keeping the overall cost of the entire cartridge at a relatively low level.

Flow-cell 31 has the structure represented in the interior of cartridge 12 in Fig. 1. As shown by Fig. 1, flow-cell 31 has a chamber 13 comprised between the microarray device 16 with an active surface 17 on it and glass plate 18. Side walls extending between the microarray device 16 and glass plate 18 define the lateral limits of chamber 13. Chamber 13 has an inlet 14 and an outlet 15. Active surface 17 is formed by an array of oligomers, preferably polynucleotides. Active surface 17 is accessible to liquid contained in chamber 13.

Cover plate 33 has a window or opening 35 that has the function of an optical interface which provides optical access to glass plate 18 and thereby to active surface 17 of the microarray device 16.

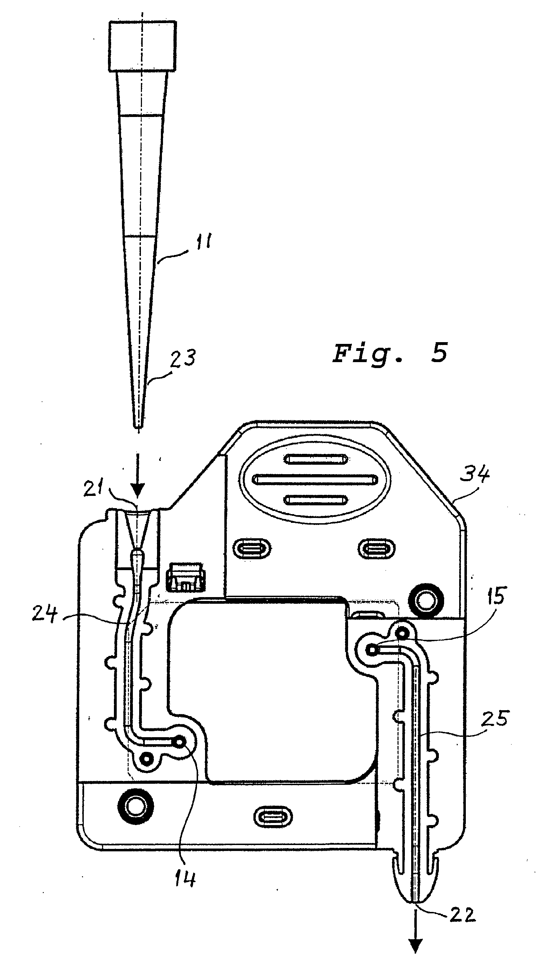

As shown in particular by Fig. 5, intermediate member 34 of the housing which contains flow-cell 31 comprises an inlet port 21 and an outlet port 22, a first conduit 24 connecting inlet port 21 with inlet 14 of the flow-cell 31, and a second conduit 25 connecting outlet 15 of flow cell 31 with outlet port 22 of the housing.

In a preferred embodiment first conduit 24 and second conduit are made of a plastic material that is chemically inert so that it cannot leach chemicals that interfere with the processing of the samples contained in the liquids to be tested.

In a preferred embodiment, inlet port 21 is an inlet channel having an inner surface which snuggly fits the outer surface of pipettor end part, so that inlet 21 port and pipette tip are thereby adapted to form an air-tight connection.

In another preferred embodiment, similar to the one shown by Fig. 2, inlet port 21 is closed by a closure that is adapted to be pierced by the pipette tip. In this embodiment inlet port 21 and pipette tip are so configured and dimensioned that they form an air-tight connection when the closure of inlet port 21 is pierced by the pipette tip 23.

Basis plate 32 of the housing of cartridge 12 has an opening or a zone 36 which has the function of a thermal interface and provides thermal access to an outer surface 37 of flow-cell 31 so that this surface can be heated or cooled by putting it in contact with an outer surface of a heat transfer element 38 like the one shown by Fig. 1.

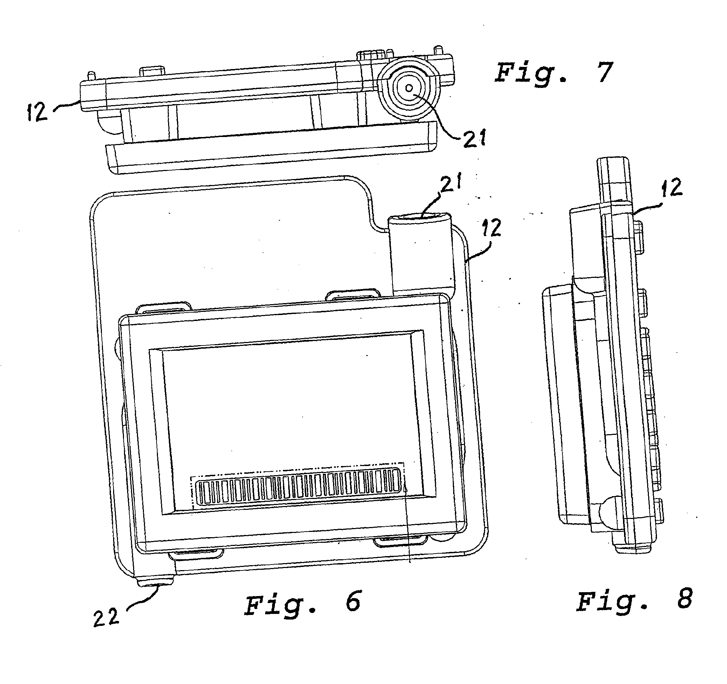

When the parts of cartridge 12 shown by Figures 3-5 are assembled, cartridge has the appearance shown by the views thereof depicted by Figures 6-8.

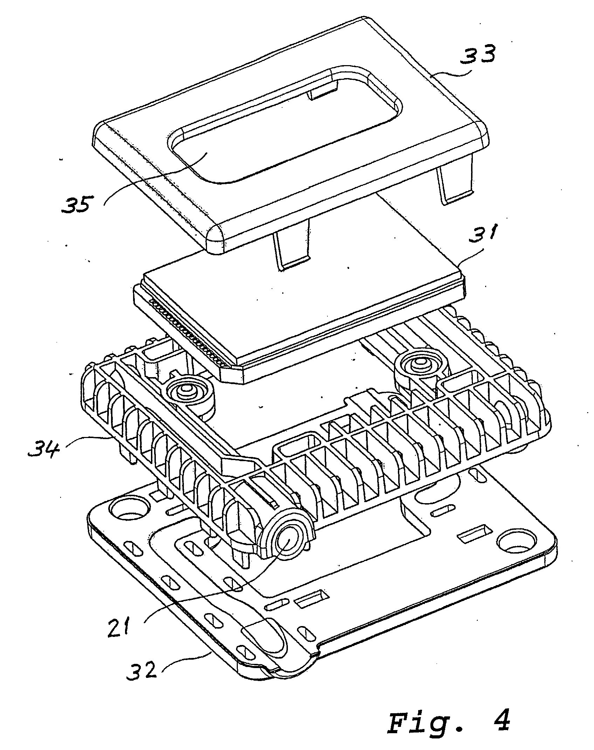

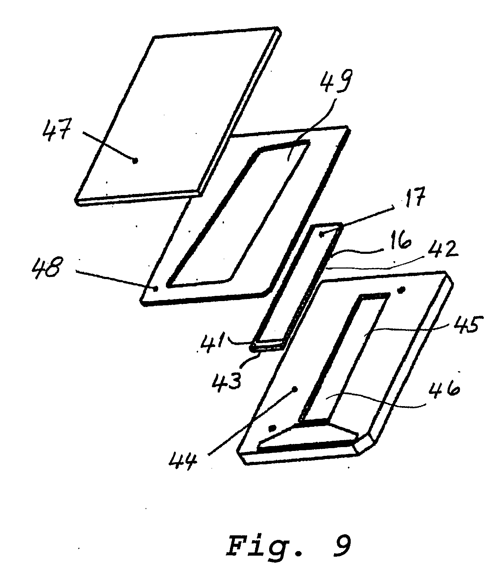

Fig. 9 shows a perspective exploded view of the components of a preferred embodiment of a flow-cell 31 of cartridge 12 shown in Figures 3 and 4. This embodiment of flow-cell 31 comprises a microarray device 16, a base plate 44, and a cover plate 47 having at least an optically transparent or translucent zone.

Microarray device 16 has on one side a first surface 41 which includes an active surface 17 formed by an array of biological polymers formed on or applied to surface 41, a second surface 42 on a second side opposite to first side, and an edge 43 having a peripheral outer surface which extends between first surface 41 and second surface 42.

Base plate 44 has a depression 45 for receiving the microarray device 16. This depression 45 has a bottom surface 46. At least part of second surface 42 of microarray device 16 is attached to bottom surface 46.

Base plate 44 and cover plate 47 are configured, dimensioned and assembled to form a chamber 13 which has an inlet 14 and an outlet 15. When chamber 13 is filled with a liquid sample the entire active surface 17 of chip shaped carrier 16 is in contact with that liquid sample.

Base plate 44 is made preferably of machinable glass ceramic, and in particular of MACOR®. Another preferred embodiment of base plate 44 is made of aluminum oxide, and in particular of black alumina.

Depression 45 of base plate 44 has preferably a predetermined uniform depth.

A preferred embodiment of flow-cell 31 further comprises a frame plate 48 that has an opening 49 that defines a cavity above the active surface 17 of the microarray device 16 and builds the side walls of chamber 13.

Chamber 13 of flow-cell 31 has preferably a depth comprised between 0.2 and 1 millimeter.

### Example 2 Of A System According To The Invention

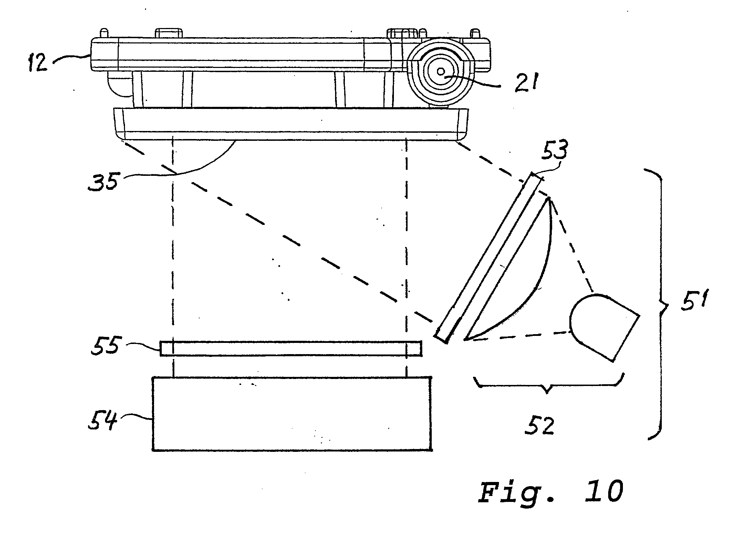

A preferred embodiment of a sample processing system according to the invention is shown by Fig. 10. This system comprises a cartridge 12 of the above-described type and an optical scanning means 51 for performing a two-dimensional optical measurement of the active surface 17 of the microarray device 16. Preferably, fluorescent or chemiluninescent illumination is scanned.

A preferred embodiment of the optical means 51 for fluorescent detection comprise a light source 52, first light filter means 53, a light receiving element 54, and second light filter means 55.

Light source 52 serves for irradiating active surface 17 of microarray device 16 with excitation light necessary e.g. for fluorescence measurements.

First light filter means 53 are arranged between light source 52 and active surface 17 located within cartridge 12. First light filter means 53 serve for irradiating active surface 17 with light having a wave length lying in a first wave length range.

Light receiving element 54 is e.g. a CCD camera and serves for acquiring a two-dimensional image of active surface 17 or a portion thereof.

Second light filter means 55 are arranged between light receiving element 54 and active surface 17. Due to the presence of second light filter means 55, light receiving element 54 only receives from active surface 17 light having a wave length lying in a second wave length range.

In a preferred embodiment a system according to the invention further comprises means for drying the active surface 17 of the microarray device 16.

The drying means preferably comprise a membrane pump connected to the pipettor 11.

### Example 3 Of A System According To The Invention

A preferred embodiment of a system according to the invention is shown by Fig. 2. This system comprises a cartridge 12 having the above-described features, a cartridge holder 56 and a waste container 57 for receiving excess liquid flowing out of the flow-cell outlet 15.

Cartridge holder 56 is adapted for holding cartridge 12 in such a position that the flow-cell inlet 14 lies at a lower height than the flow-cell outlet 15, so that liquid supplied to the flow-cell chamber 13 through inlet 14 displaces air contained in chamber 13 and enables a complete and bubble free filling of chamber with liquid, any excess of liquid leaving chamber 13 through flow-cell outlet 15.

In a preferred embodiment, the amount of liquid supplied to the flow-cell chamber 13 is larger than the volume of the flow-cell chamber, so that excess liquid flows out of flow-cell outlet 15 and is collected by waste container 57.

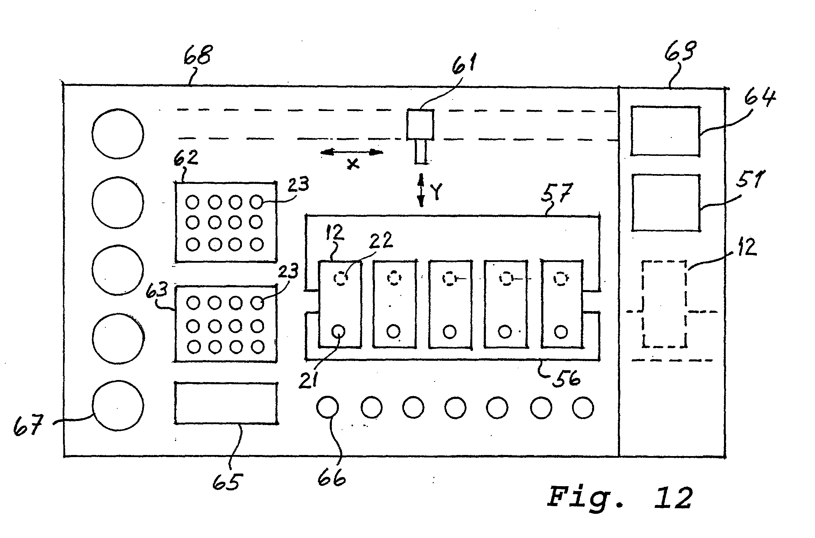

In another preferred embodiment shown by Fig. 12, the system further comprises an automatic pipetting system 61, one or more sets 62, 63 of pipetting tips 23, and a control system 64 that operates the automatic pipetting system for performing pipetting operations. These operations including picking up a pipetting tip 23, loading a liquid sample taken from a sample container into pipetting tip 23, inserting tip into inlet port 21 of the cartridge housing, and transferring liquid sample from the inserted tip 23 to flow-cell chamber 13 within cartridge 12. Automatic pipetting system 61 is adapted for transporting one or more pipetting tips in three orthogonal directions X, Y, Z.

The embodiment shown by Fig. 12 has a modular structure and comprises a first module 68, where liquid handling and processing of the samples takes place, and a second module 69, where optical imaging of the active surfaces of the chips contained in cartridges 12 is performed. This second module contains the optical means 51 described with reference to Fig. 10.

First module 68 contains a cartridge holder 56 for holding a plurality of cartridges 12 in such a position that their inlet ports 21 are accessible by the pipetting tip transported by automatic pipetting unit 61, and their outlet ports deliver excess liquid into a common waste container 57.

The system shown by Fig. 12 further comprises means for moving cartridge holder 56 and cartridges 12 to a position in module 69 (position represented by broken lines) where optical means 51 take images of the active surface of the microarray device contained in each cartridge.

As shown by Fig. 12, the embodiment just described further comprises a zone for receiving a plurality of sample tubes 66, a zone for receiving a plurality of reagent tubes 67, a container 65 for receiving wasted tips.

In a preferred embodiment, each of pipetting tips 23 is adapted to form an air-tight connection with the inlet port 21 of cartridge 12.

The automatic pipetting system 61 and the pipetting tips 23 are preferably also used for one of the following additional purposes:
for applying air flow to flow-cell chamber 13 for expelling liquid contained therein,
for applying air flow for drying the active surface 17 of the microarray device 16.

In a preferred embodiment, inlet port 21 of the housing of cartridge 12 is adapted for receiving a pipetting tip 23 inserted in that inlet port 21 coming from a position located above inlet port 21.

### Example 4 Of A System According To The Invention

A preferred embodiment of a system according to the invention comprises a plurality of cartridges 12 having the above-described features, a cartridge holder 56 for holding a plurality of cartridges 12, and a waste container 57 for receiving excess liquid flowing out from any and all of the outlet ports 22 of a plurality of cartridges 12.

Modifications and alternative embodiments of the invention will be apparent to those skilled in the art in view of the foregoing description. Accordingly, this description is to be construed as illustrative only and is for the purpose of teaching those skilled in the art the best mode of carrying out the invention. Details of the apparatus and the processes described above may be varied without departing from the spirit of the invention and the exclusive use of all modifications which come within the scope of the appended claims is reserved.

## Claims

1. A sample processing system for processing a sample contained in a liquid, said system comprising:
a) a pipettor having a pipette tip for dispensing liquids, and
b) a cartridge comprising:
(b.1) a chamber which has an inlet and an outlet, said chamber containing a microarray device having an active surface which is formed by an array of different oligomers at known locations, said active surface being accessible to liquid contained in the chamber,
(b.2) an optical interface which provides optical access to said active surface of said microarray device, and
(b.3) an inlet port and an outlet port, said inlet port being so configured and dimensioned that it forms an air-tight connection with the pipette tip when said pipette tip is inserted into said inlet port.

2. The sample processing system according to claim 1, wherein a first channel connects said inlet port with said chamber inlet, a second channel connects said chamber outlet with said outlet port, and said chamber inlet lies at a lower height than said chamber outlet, whereby liquid supplied to the chamber through said chamber inlet displaces air contained in said chamber and enables a complete and bubble free filling of said chamber with liquid, any excess of liquid leaving said chamber through said chamber outlet.

3. The sample processing system according to claim 1, wherein said inlet port is an inlet channel having an inner surface which fits the outer surface of said pipettor end part, said inlet port and said pipettor end part being thereby adapted to form an air-tight connection.

4. The sample processing system according to claim 1, wherein said inlet port is closed by a closure which is adapted to be pierced by said pipette tip, whereby said inlet port and said pipette tip being so configured and dimensioned that they form an air-tight connection when that closure is pierced by said pipettor end part.

5. The sample processing system according to claim 1, further comprising a thermal interface, whereby the thermal interface allows heating or cooling said microarray device by heat exchange with a heat transfer means.

6. The sample processing system according to claims 1, wherein said inlet port is adapted for receiving said pipette tip inserted in the inlet port coming from a position located above said port.

7. A cartridge for processing a sample contained in a liquid, said cartridge comprising:
(a) a flow-cell having a chamber which has an inlet and an outlet, said flow-cell containing a microarray device having an active surface, said active surface being accessible to liquid contained in that chamber, and
(b) a housing containing said flow-cell, said housing comprising:
(b.1) an optical interface which provides optical access to said active surface of said microarray device;
(b.2) an inlet port and an outlet port;
(b.3) a first conduit connecting said inlet port of said housing with said inlet of the flow-cell; and
(b.4) a second conduit connecting said outlet of said flow cell with said outlet port of said housing.

8. The cartridge according to claim 7, wherein said inlet port is an inlet channel having an inner surface which fits the outer surface of a pipette tip, whereby said inlet port and said pipette tip being thereby adapted to form an air-tight connection.

9. The cartridge according to claim 7, wherein said inlet port of said housing is closed by a closure which is adapted to be pierced by a pipette tip, whereby said inlet port and said pipette tip being so configured and dimensioned that it forms an air-tight connection when that closure is pierced by said pipette tip.

10. The cartridge according to claim 7, wherein said housing has a thermal interface that provides access to an outer surface of said flow-cell so that the active surface of the microarray device can be heated or cooled by putting it in contact with an outer surface of a heat transfer element.

11. The cartridge according to claim 7, wherein said flow cell comprises:
(a) a microarray device having a first surface that is an active surface, a second surface on a second side opposite to said first side, and an edge having a peripheral outer surface which extends between said first surface and said second surface,
(b) a base plate having a depression for receiving said microarray device, said depression having a bottom surface such that at least part of said second surface of said microarray device being attached to said bottom surface of the base plate, and
(c) a cover plate having a transparent or a translucent region,
said base plate and said cover plate being so configured, dimensioned and assembled to form a chamber, wherein the chamber has an inlet and an outlet, whereby when the chamber is filled with a liquid sample the active surface of said microarray device is in contact with the liquid.

12. The cartridge according to claim 11, wherein said depression of said base plate has a predetermined depth.

13. The cartridge according to claim 7, further comprising a frame plate having an opening that defines a cavity above said active surface of said microarray device.

14. The cartridge according to claim 7, wherein said flow-cell chamber has a depth comprised between 0.2 and 1 millimeter.

15. The cartridge according to claim 11, wherein said base plate is made of machinable glass ceramic.

16. The cartridge according to claim 11, wherein said base plate is made of aluminum oxide.

17. A sample processing system for processing a sample contained in a liquid, said system comprising:
(a) a cartridge having
(a.1) a chamber which has an inlet and an outlet, said chamber containing a microarray device having an active surface which is formed by an array of different oligomers at known locations, said active surface being accessible to liquid contained in the chamber,
(a.2) an optical interface which provides optical access to said active surface of said microarray device, and
(a.3) an inlet port and an outlet port, said inlet port being so configured and dimensioned that it forms an air-tight connection with a pipette tip when said pipette tip is inserted into said inlet port; and
(b) an optical means for performing an optical fluorescence or chemiluminescence scanning of said active surface of said microarray device.

18. The sample processing system according to claim 17, wherein said optical scanning means comprises:
(a) a light source for irradiating said active surface of said microarray device with excitation light,
(b) first light filter means arranged between said light source and said active surface for irradiating said active surface with light having a wave length lying in a first wave length range,
(c) a light receiving element for acquiring an image of said active surface or a portion thereof, and
(d) second light filter means arranged between said light receiving element and said active surface so that the latter element receives from said active surface light having a wave length lying in a second wave length range.

19. The sample processing system according to claim 17, further comprising means for drying the active surface of said microarray device.

20. The sample processing system according to claim 19, wherein said drying means comprises a membrane pump.

21. A sample processing system for processing a sample contained in a liquid, said system comprising:
(a) a cartridge having:
(a.1) a chamber which has an inlet and an outlet, said chamber containing a microarray device having an active surface which is formed by an array of different oligomers at known locations, said active surface being accessible to liquid contained in the chamber,
(a.2) an optical interface which provides optical access to said active surface of said microarray device, and
(a.3) an inlet port and an outlet port, said inlet port being so configured and dimensioned that it forms an air-tight connection with a pipette tip when said pipette tip is inserted into said inlet port;
(b) a cartridge holder adapted for holding said cartridge in such a position that the flow-cell inlet lies at a lower height than the flow-cell outlet, whereby liquid supplied to the flow-cell chamber through said inlet displaces air contained in said chamber and enables a complete and bubble free filling of said chamber with liquid, any excess of liquid leaving said chamber through said flow-cell outlet; and
(c) a waste container for receiving excess liquid flowing out of the flow-cell outlet.

22. The sample processing system according to claim 21, wherein the amount of liquid supplied to the flow-cell chamber is larger than the volume of the flow-cell chamber, so that excess liquid flows out of said flow-cell outlet.

23. The sample processing system according to claim 21, further comprising:
(a) an automatic pipetting system,
(b) a set of pipetting tips,
(c) a control system which operates said automatic pipetting system for performing pipetting operations, said operations including picking up a pipetting tip, loading a liquid sample taken from a sample container into said pipetting tip, inserting said tip into said inlet port of said housing, transferring said liquid sample from the inserted tip to said flow-cell chamber.

24. The sample processing system according to claim 23, wherein each of said pipetting tips is adapted to form an air-tight connection with the inlet port of said cartridge.

25. The sample processing system according to claim 23, wherein said automatic pipetting system and said pipetting tip are also used for applying air flow to said flow-cell chamber for expelling liquid contained therein.

26. The sample processing system according to claim 23, wherein said air flow is used for drying the active surface of said microarray device.

27. The sample processing system according to claim 23, wherein said inlet port of said housing is adapted for receiving a pipetting tip inserted in that inlet port coming from a position located above said port.

28. A sample processing system for processing a sample contained in a liquid, said system comprising
(a) a plurality of cartridges, wherein each cartridge comprises:
(b.1) a chamber which has an inlet and an outlet, said chamber containing a microarray device having an active surface which is formed by an array of different oligomers at known locations, said active surface being accessible to liquid contained in the chamber,
(b.2) an optical interface which provides optical access to said active surface of said microarray device, and
(b.3) an inlet port and an outlet port, said inlet port being so configured and dimensioned that it forms an air-tight connection with a pipette tip when said pipette tip is inserted into said inlet port;
(b) a cartridge holder for holding said plurality of cartridges; and
(c) a waste container for receiving excess liquid flowing out from any and all of the outlet ports of said plurality of cartridges
